# EUROPÄISCHE PATENTSCHRIFT

(11) **EP 1 943 130 B1**
(45) Veröffentlichungstag und Bekanntmachung des Hinweises auf die Patenterteilung: **12.05.2010**
(21) Anmeldenummer: 06807478.0
(22) Anmeldetag: 23.10.2006
(51) Int. Cl.: B60S 1/08

(54) **VERFAHREN UND VORRICHTUNG ZUM ERKENNEN EINER NOTWENDIGKEIT EINES REFERENZWISCHVORGANGS**
METHOD AND APPARATUS FOR DETECTING THE NEED FOR A REFERENCE WIPING OPERATION
PROCÉDÉ ET DISPOSITIF DE DÉTECTION DE LA NÉCESSITÉ D'UNE OPÉRATION D'ESSUIE-GLACE DE RÉFÉRENCE

(30) Priorität: 24.10.2005 DE 102005050771
(43) Veröffentlichungstag der Anmeldung: 16.07.2008
(73) Patentinhaber: ROBERT BOSCH GMBH, 70442 Stuttgart (DE)
(72) Erfinder: MEIER, Hans, 77833 Ottersweier (DE); BLITZKE, Henry, 77815 Buehl (DE); BOCHAT, Ralf, 76275 Ettlingen (DE); MERKEL, Klaus, 76596 Forbach (DE)
(86) Internationale Anmeldenummer: PCT/EP2006/067671
(87) Internationale Veröffentlichungsnummer: WO 2007/048770

(56) Entgegenhaltungen:
- DE-A1- 10 214 421
- US-A- 4 916 374
- US-A- 5 760 559
- US-A1- 2001 050 766
- US-A1- 2005 178 954

## Beschreibung

### Stand der Technik

Die Erfindung betrifft ein Verfahren und eine Vorrichtung zum Erkennen einer Notwendigkeit eines Referenzwischvorgangs.

Es ist schon bekannt, dass in Scheibenwischersystemen von Kraftfahrzeugen mit einem optischen Regensensor zu Beginn einer Aktivierung des Regensensors ein so genannter Referenzwischvorgang durchgeführt wird. Dieser dient dazu, dass eine zu wischende Windschutzscheibe des Kraftfahrzeugs für den Regensensor in einen definierten Ausgangszustand gebracht wird, um ein fehlerfreies Funktionieren des Regensensors von Beginn an sicherzustellen. Es ist dabei möglich, dass der Referenzwischvorgang nach einer Aktivierung des Regensensors mittels eines Lenkstockschalters des Kraftfahrzeuges ausgeführt wird. Denkbar ist auch, dass nach einer Aktivierung des Regensensors mit einer Zündungseinrichtung des Kraftfahrzeugs kein Referenzwischvorgang durchgeführt wird, nach einer Aktivierung des Regensensors mit dem Lenkstockschalter hingegen ein Referenzwischvorgang durchgeführt wird.

Ferner ist es auch möglich, dass ein Referenzwischvorgang nie durchgeführt wird, wobei der optische Regensensor dann lediglich auf Signaländerungen, die in den Regensensor zurückgekoppelten Lichtmengen entsprechen, reagiert. Die Signaländerungen können aufgrund von neuen Regentropfen auf dem Regensensor bzw. aufgrund von Regentropfen, die sich infolge von Fahrtwind auf der Scheibe bewegen, ausgelöst werden.

Der Referenzwischvorgang unterstützt eine möglichst großflächige Ausnützung der vom Regensensor bereitgestellten Sensorfläche.

Bekannte Wischerarme mit einem Befestigungsmittel zur Befestigung einer Zugfeder sind in US 2001/0050766 A1, US 4,916,374, US 2005/0178954 A1, US 5,760,559, DE 10214 421 A1 offenbart.

Es ist Aufgabe der vorliegenden Erfindung, ein verbessertes Verfahren und eine Vorrichtung zum Erkennen einer Notwendigkeit eines Referenzwischvorgangs bereitzustellen.

Diese Aufgabe wird durch ein Verfahren gemäß Anspruchs 1 und durch eine Vorrichtung gemäß Anspruch 8 gelöst. Weitere vorteilhafte Ausführungsformen sind in den abhängigen Ansprüchen angegeben.

Das Verfahren gemäß der vorliegenden Erfindung ist zum Erkennen einer Notwendigkeit zum Durchführen eines Referenzwischvorgangs bei einem Scheibenwischersystem vorgesehen, wobei das Scheibenwischersystem einen optischen Regensensor umfasst und wobei in einem elektronischen Speicher ein Arbeitspunkt des Regensensors für eine im wesentlichen trockene Scheibe abgespeichert ist. Das Verfahren umfasst folgende Schritte:
- Ermitteln eines aktuellen Arbeitspunktes des Regensensors,
- Vergleichen des aktuell ermittelten Arbeitspunktes mit dem abgespeicherten Arbeitspunkt, und
- falls der Signalpegel des Regensensors für den aktuellen Arbeitspunkt und den abgespeicherten Arbeitspunkt in Wesentlichen identisch sind, wobei der Signalpegel einer in den Regensensor zurückgekoppelten Lichtmenge entspricht, und den abgespeicherten Arbeitspunkt in Wesentlichen identisch sind, wobei der Signalpegel einer in den Regensensor zurückgekoppelten lichtmenger entspricht,
- Abgeben eines Wischbefehls an das Scheibenwischersystem, falls die an den Arbeitspunkten zugeordneten Senderströme des Regensensors im Wesentlichen nicht mit den Arbeitspunkten zugeordneten Signalpegeln korrelieren.

Vorteilhaft ist es mit Hilfe des erfindungsgemäßen Verfahrens möglich, einen Referenzwischvorgang nur dann zu initiieren, wenn der abgespeicherte Arbeitspunkt, der einer im wesentlichen trockenen bzw. sauberen Windschutzscheibe entspricht, von dem aktuell ermittelten Arbeitspunkt abweicht.

Dadurch wird aufgrund der Tatsache, dass der aktuell ermittelte Arbeitspunkt einer im wesentlichen trockenen bzw. sauberen Scheibe entspricht, vom Regensensor erkannt wann ein

Dadurch wird aufgrund der Tatsache, dass der aktuell ermittelte Arbeitspunkt einer im wesentlichen trockenen bzw. sauberen Scheibe entspricht, vom Regensensor erkannt wann ein Referenzwischvorgang sinnvollerweise durchgeführt werden sollte und wann nicht. Nachteilige Verkratzungen auf der Windschutzscheibe, die infolge von Referenzwischvorgängen über trockene und eventuell verschmutzte Windschutzscheiben durchgeführt werden, können so wirksam vermieden werden. Daraus resultiert vorteilhaft eine Schonung von Wischerblättern des Scheibenwischersystems und eine Schonung der Windschutzscheibe, wodurch eine Betriebsdauer der genannten Komponenten wesentlich erhöht sein kann. Eine Anpassung des Scheibenwischersystems an real vorhandene Umgebungsbedingungen ist somit vorteilhaft unterstützt.

Gemäß einer bevorzugten Weiterbildung des erfindungsgemäßen Verfahrens ist vorgesehen, dass eine Anpassung des abgespeicherten Arbeitspunktes an geänderte Betriebsbedingungen des Scheibenwischersystems durchgeführt wird. Dadurch kann der im elektronischen Speicher abgespeicherte Arbeitspunkt an geänderte Betriebsbedingungen des Scheibenwischersystems, beispielsweise an eine Änderung im Zustand der Windschutzscheibe oder an eine Änderung im Zustand des Regensensors angepasst werden. Ein Langzeitbetriebsverhalten des Scheibenwischersystems, in dem das erfindungsgemäße Verfahren verwendet wird, ist somit verbessert.

Gemäß einer weiteren bevorzugten Weiterbildung des erfindungsgemäßen Verfahrens ist vorgesehen, dass eine Überwachung des abgespeicherten Arbeitspunktes nach jedem Referenzwischvorgang durchgeführt wird. Dadurch ist ein effizienter Betrieb des Scheibenwischersystems unter real vorhandenen Betriebs- und Umgebungsbedingungen unterstützt.

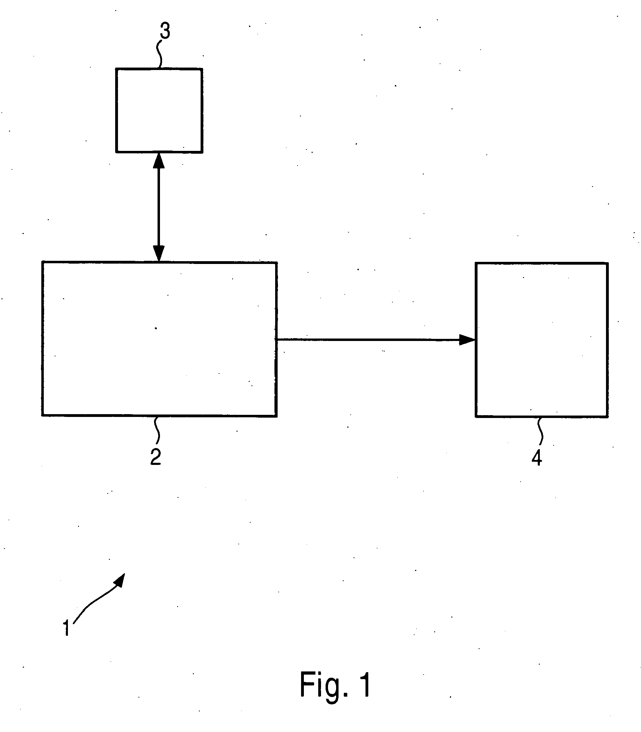

Die Erfindung wird nunmehr im Folgenden detailliert beschrieben. Eine Figur 1 zeigt dabei ein prinzipielles Blockschaltbild einer Vorrichtung, mit der das erfindungsgemäße Verfahren verwendet werden kann.

Figur 1 zeigt prinzipiell und stark vereinfacht ein Scheibenwischersystem 1 mit einem optischen Regensensor 2, einem elektronischen Speicher 3 (beispielsweise ein EEPROM) und einer Ansteuerungseinrichtung 4. Der elektronische Speicher 3 kann als jede Art eines nichtflüchtigen, programmierbaren Schreib-/Lesespeichers ausgebildet sein, wobei der elektronische Speicher 3 günstigerweise eine möglichst hohe Anzahl von Programmierzyklen bereitstellen sollte. Der Regensensor 2 ist mit dem elektronischen Speicher 3 verbunden und kann Daten aus dem elektronischen Speicher 3 auslesen und in den elektronischen Speicher 3 einschreiben. Der Regensensor 2 ist weiterhin mit einer Ansteuerungseinrichtung 4 verbunden, an die der Regensensor 2 Steuerbefehle abgibt. Mit Hilfe der Ansteuerungseinrichtung 4 können beispielsweise Elektromotoren (nicht dargestellt) des Scheibenwischersystems 1 angesteuert werden.

Herkömmliche optische Regensensoren 2 umfassen in der Regel unter anderem einen optischen Sender und einen optischen Empfänger, wobei der optische Sender einen Lichtstrahl unter einem Winkel einer Totalreflexion in eine Windschutzscheibe eines Kraftfahrzeugs einstrahlt. An einer Grenzfläche zwischen einem Glas der Windschutzscheibe und Luft wird der Lichtstrahl gebrochen und im Falle, dass sich kein Regen auf der Windschutzscheibe befindet, wieder weitgehend vollständig in den optischen Empfänger zurückgekoppelt. Die Menge des zurückgekoppelten Lichts spiegelt sich in einem entsprechenden Signalpegel eines Lichtsignawider. Dieser Signalpegel ergibt sich aus einem zur Ansteuerung des optischen Senders verwendeten Senderstrom, einem Verstärkungsgrad des optischen Empfängers, einem Transmissionsgrad der Windschutzscheibe bzw. einem Zustand der Windschutzscheibe und einer Umgebungstemperatur. Durch eine Temperaturabhängigkeit des Signalpegels kann ein Schaltverhalten des Regensensors 2 beeinflusst sein.

Die genannten Parameter sind bei einer trockenen und bei einer feuchten bzw. nassen Windschutzscheibe unterschiedlich. Aufgrund der Tatsache, dass bei Nässe auf der Scheibe Licht des optischen Senders nicht vollständig in den optischen Empfänger zurückgekoppelt wird, ist beispielsweise der Signalpegel bei einer feuchten Scheibe geringer. Um in diesem Fall einen mit einer trockenen Scheibe vergleichbar großen Signalpegel zu erhalten, ist also eine höhere Empfängerverstärkung und/oder ein höherer Senderstrom zur Ansteuerung des optischen Senders erforderlich.

Erfindungsgemäß ist nunmehr vorgesehen, dass vom Regensensor 2 im elektronischen Speicher 3 ein Arbeitspunkt des Regensensors 2, der einer im wesentlichen trockenen bzw. sauberen Scheibe entspricht, abgespeichert wird.

Weiterhin wird bei jedem Aktivieren des Regensensors 2 ein aktueller Arbeitspunkt des Regensensors 2 mit entsprechenden Parametern ermittelt. Der aktuell ermittelte Arbeitspunkt wird sodann mit dem im elektronischen Speicher 3 abgespeicherten Arbeitspunkt verglichen. Für den Fall, dass die beiden verglichenen Arbeitspunkte im wesentlichen übereinstimmen, wird diese Tatsache vom Regensensor 2 dahingehend interpretiert, dass sich im wesentlichen keine Feuchtigkeit auf der Windschutzscheibe befindet und dass somit keine weitere Aktion seitens des Regensensors 2 erforderlich ist. Für den Fall allerdings, dass die beiden verglichenen Arbeitspunkte voneinander abweichen, wird diese Tatsache vom Regensensor 2 dahingehend interpretiert, dass sich Nässe auf der Scheibe befindet. In diesem Fall wird ein Wischbefehl an die Ansteuerungseinrichtung 4 des Scheibenwischersystems 1 abgegeben.

Vorteilhaft können auf diese Weise herkömmliche Referenzwischvorgänge, die stets unabhängig vom gerade vorliegenden Scheibenzustand durchgeführt werden, optimiert werden. Ein Referenzwischvorgang wird erfindungsgemäß nur mehr dann durchgeführt, wenn er notwendig ist, also im Falle, dass sich Nässe bzw. Feuchtigkeit auf der Windschutzscheibe befindet. Andernfalls wird der im elektronischen Speicher 3 abgespeicherte Arbeitspunkt für eine im wesentlichen trockene Scheibe als gültig angesehen, die Scheibe also als im wesentlichen trocken und sauber interpretiert und somit kein Referenzwischvorgang ausgelöst.

Beim Vergleich des abgespeicherten Arbeitspunktes mit dem aktuell ermittelten Arbeitspunkt müssen unter Umständen Parameter der Arbeitspunkte umgerechnet werden, um vergleichbar zu sein. Dies ergibt sich aus der Tatsache, dass sich ein Arbeitspunkt aus mehreren unterschiedlichen Parametern zusammensetzt. Ein Arbeitspunkt resultiert dabei im wesentlichen aus einer definierten Empfängerverstärkung und aus einem definierten Senderstrom. Dadurch kann es durch verschiedene Empfangsverstärkungsbereiche unterschiedliche gültige Arbeitspunkte geben, die mit unterschiedlichen Senderströmen einstellbar sind. Ein kleiner Senderstrom mit einer großen Empfangsverstärkung kann in Summe also einen gleichwertigen Arbeitspunkt des Regensensors 2 wie ein großer Senderstrom mit einer kleinen Empfangsverstärkung ergeben.

Dadurch müssen zu einer Vergleichbarkeit der Arbeitspunkte jeweils auch vergleichbare Parameter verwendet werden. Unter Umständen sind dazu Überlappungsvergleiche von Verstärkerkennlinien des optischen Empfängers erforderlich. Letztlich dient dieses Umrechnen der Parameter aber lediglich dazu, dass unterschiedlich ausgebildete Empfängerverstärkungen und Senderströme vergleichbar gemacht werden.

Das erfindungsgemäße. Prinzip kann ergänzend zum oben beschriebenen Verfahren auch in einer modifizierten Weise umgesetzt werden, die nachfolgend beschrieben wird:
Parameter des abgespeicherten Arbeitspunktes werden nach einer Aktivierung des Scheibenwischersystems 1 aus dem elektronischen Speicher 3 ausgelesen und dazu verwendet, um mit diesen Größen den optischen Sender des Regensensors 2 anzusteuern. Aus dieser Ansteuerung ergibt sich abhängig von den gerade vorliegenden Umgebungs- und Betriebsbedingungen ein bestimmter Signalpegel des in den optischen Empfänger zurückgekoppelten Lichts. Aus einem Signalpegelvergleich zwischen diesem ermittelten Signalpegel und dem im elektronischen Speicher 3 zusätzlich zum Arbeitspunkt abgespeicherten Signalpegel kann nunmehr ein eventuell vorhandener Unterschied der beiden Signalpegel detektiert werden.

Für den Fall, dass die beiden verglichenen Signalpegel voneinander abweichen, wird diese Tatsache vom Regensensor 2 dahingehend interpretiert, dass sich Nässe auf der Windschutzscheibe befindet und somit ein Wischbefehl an die Ansteuerungseinrichtung 4 des Scheibenwischersystems 1 abgegeben wird. Für den Fall, dass die beiden verglichenen Signalpegel im wesentlichen übereinstimmen, wird diese Tatsache vom Regensensor 2 dahingehend interpretiert, dass sich die Scheibe aktuell im wesentlichen in einem sauberen bzw. trockenen Zustand befindet und daher kein Wischbefehl an die Ansteuerungecinrichtung 4 des Scheibenwischersystems 1 abgegeben wird.

Aus einem Signalpegeleinbruch kann somit auf ein Vorhandensein von Regen auf der Scheibe geschlossen werden. Letztlich stellt das beschriebene Verfahren einen zusätzlichen und alternativen Weg zur Umsetzung des erfindungsgemäßen Prinzips dar. Vor dem Vergleich der Signalpegel muss auch in diesem Fall unter Umständen eine Umrechnung der Signalpegelwerte zum Herstellen einer Vergleichbarkeit der Signalpegel durchgeführt werden.

Das erfindungsgemäße Prinzip kann ergänzend zu den oben beschriebenen Verfahren auch in einer weiteren modifizierten Weise umgesetzt werden, die nachfolgend beschrieben wird:
Aufgrund der Tatsache, dass Arbeitspunkt-Einstellungen eine Nichtlinearität der zugeordneten Parameter aufweisen können (z.B. eine Nichtlinearität zwischen Strominkrementstufen und Stromänderungen), kann aus einem bloßen Vergleich von Arbeitspunkten unter Umständen nicht auf ein Vorhandensein von Feuchtigkeit auf der Scheibe geschlossen werden. Daher ist es günstig, zusätzlich zum Vergleich der Arbeitspunkte eine Überprüfung der den verglichenen Arbeitspunkten zugeordneten Signalpegel durchzuführen.

Insbesondere wird für den Fall, dass die verglichenen Arbeitspunkte im Wesentlichen übereinstimmen und daher eigentlich kein Referenzwischvorgang ausgelöst werden dürfte, ein zusätzlicher Signalpegelvergleich durchgeführt. Es wird insbesondere eine Korrelation zwischen Senderstrom und Signalpegel überprüft, da der Senderstrom direkt mit dem Signalpegel des in den optischen Empfänger zurückgekoppelten Lichts korreliert. Ein höherer Senderstrom bedeutet also in der Regel einen höheren Signalpegel und umgekehrt.

Beispielsweise wird für den Fall, dass die genannte Korrelation nicht vorhanden ist, sich also trotz unterschiedlicher Senderströme im Wesentlichen identische Signalpegel ergeben, diese Tatsache vom optischen Regensensor 2 dahingehend interpretiert, dass Feuchtigkeit auf der Scheibe vorhanden ist. In diesem Fall wird ein Wischbefehl an die Ansteuerungseinrichtung 4 des Scheibenwischsystems 1 abgegeben. Für den Fall wiederum, dass die Senderströme der verglichenen Arbeitspunkte mit den Signalpegeln korrelieren, die unterschiedlichen Senderströme sich also in unterschiedlichen Signalpegeln widerspiegeln, wird diese Tatsache vom Regensensor 2 dahingehend interpretiert, dass eine im Wesentlichen trockene Scheibe vorliegt. In diesem Fall wird kein Befehl zum Referenzwischen an die Ansteuerungseinrichtung 4 des Scheibenwischsystems 1 abgegeben. Letztlich wird bei diesem Prinzip für den Fall, dass aus einem bloßen Vergleich von Arbeitspunkten eine Notwendigkeit eines Referenzwischvorgangs nicht erkennbar ist, ein ergänzender Signalpegelvergleich durchgeführt.

In einer Weiterbildung des erfindungsgemäßen Verfahrens ist es vorgesehen, dass Änderungen im Zustand der Scheibe bzw. im Zustand des Regensensors 2 überwacht werden. Beispielsweise ist es denkbar, dass bei jeder Durchführung des Referenzwischvorgangs der Signalpegel des in den Empfänger zurückgekoppelten Lichtes überwacht wird. Zu diesem Zweck wird der Signalpegel vor und nach dem Referenzwischvorgang messtechnisch ermittelt. Die beiden Signalpegel werden anschließend verglichen.

Im Fall von Nässe auf der Scheibe ergibt der genannte Signalpegelvergleich vor und nach dem Referenzwischvorgang unterschiedlich große Signalpegel des in den Empfänger zurückgekoppelten Lichtes, was einem normalen Reinigungsvorgang der Scheibe bei Regen entspricht. In diesem Fall wird der im elektronischen Speicher 3 abgespeicherte Arbeitspunkt nicht aktualisiert.

Für den Fall hingegen, dass die beiden verglichenen Signalpegel im wesentlichen gleich groß sind, wird diese Tatsache vom Regensensor 2 dahingehend interpretiert, dass eine Reinigung bzw. eine Entfernung von Nässe auf der Scheibe nicht stattgefunden hat. Somit werden die im wesentlichen gleich großen Signalpegel als ein Referenzwischvorgang über eine trockene Scheibe in Kombination mit einer Änderung im Zustand der Windschutzscheibe bzw. des Regensensors 2 interpretiert. Deshalb wird nunmehr vom Regensensor 2 ein neuer, aktualisierter Arbeitspunkt im elektronischen Speicher 3 abgespeichert, der an die geänderten Umstände der Windschutzscheibe, des Regensensors 2 usw. angepasst ist.

Die genannten Änderungen im Zustand der Windschutzscheibe können beispielsweise infolge von Alterungseffekten in der Scheibe und im Regensensor 2 bzw. infolge eines Austauschs von Komponenten des optischen Regensensors 2 bzw. der Windschutzscheibe mit einem geänderten Transmissionsgrad hervorgerufen sein. Geänderte Betriebsbedingungen des Scheibenwischersystems 1 können mit dieser Weiterbildung des Verfahrens somit vorteilhaft berücksichtigt werden. Eine Robustheit und Stabilität des erfindungsgemäßen Verfahrens, das auf diese Weise weitgehend unabhängig von sich ändernden Betriebsbedingungen verwendbar ist, kann somit vorteilhaft gewährleistet werden.

Eine Anzahl von erforderlichen Aktualisierungs-Schreibzyklen in den elektronischen Speicher 3 kann ferner mit diesem Prinzip wirkungsvoll minimiert werden. Denkbar ist auch, dass die genannte Überwachung und Aktualisierung des im elektronischen Speicher 3 abgespeicherten Arbeitspunktes permanent im laufenden Betrieb des Regensensors 2 durchgeführt wird. In diesem Fall kann bei jedem Deaktivieren des Regensensors 2 eine Aktualisierung des Arbeitspunktes im elektronischen Speicher 3 vorgenommen werden. Vorteilhaft kann derart eine noch genauere Anpassung des abgespeicherten Arbeitspunkts an geänderte Umgebungs- und Betriebsbedingungen des Scheibenwischersystems 1 erreicht werden. Eine Ausbildung des elektronischen Speichers 3 mit einer im wesentlichen unbegrenzten Anzahl von Programmierzyklen ist in diesem Falle vorteilhaft.

Als besonders vorteilhaft wird bei der vorliegenden Erfindung angesehen, dass das erfindungsgemäße Verfahren Referenzwischvorgänge bei Scheibenwischersystemen 1 mit einem optischen Regensensor 2 optimiert. Referenzwischvorgänge werden nur mehr dann ausgeführt, wenn sie auch tatsächlich erforderlich sind, also im Falle, dass sich Regen auf der Windschutzscheibe befindet. In anderen Fällen, wenn also die Scheibe trocken und eventuell verschmutzt sein kann, wird ein Referenzwischvorgang nicht durchgeführt und somit eine Lebensdauer von Wischerblättern und der Windschutzscheibe verlängert. Unerwünschte Verkratzungen auf der Windschutzscheibe können somit wirkungsvoll minimiert werden.

Vorteilhaft wird bei der Erfindung auch angesehen, dass das erfindungsgemäße Verfahren sehr gut bei permanent aktiven Scheibenwischsystemen 1 mit einem optischen Regensensor 2 verwendbar ist. Diese Systeme werden durch ein Umdrehen eines Zündschlüssels bzw. durch eine manuelle Betätigung eines Benutzers des Kraftfahrzeugs aktiviert und bleiben bis zu einer weiteren Betätigung aktiviert.

Als vorteilhaft wird weiterhin angesehen, dass mit dem erfindungsgemäßen Verfahren langfristige Alterungseffekte und Änderungen in Betriebs- und Umgebungsbedingungen des Scheibenwischersystems 1 wirkungsvoll berücksichtigt werden können. Auf diese Weise kann mit dem erfindungsgemäßen Verfahren eine nützliche und effiziente, an realen Umgebungsbedingungen ausgerichtete Funktionalität der Scheibenwischersysteme 1 unterstützt sein.

Als vorteilhaft wird weiterhin angesehen, dass das erfindungsgemäße Verfahren unabhängig von einer Funktionslogik des Scheibenwischersystems 1 verwendbar sein kann. Ein Bedienvorgang eines Benutzers des Scheibenwischersystems 1 kann mit einer beliebig hohen Prioritätsstufe bewertet werden, sodass gegebenenfalls ein Wischvorgang in Reaktion auf den Bedienvorgang immer durchgeführt wird und völlig unabhängig vom Zustand der Windschutzscheibe bzw. von der Wirkungsweise des erfindungsgemäßen Verfahrens ist. Eine individuelle Konfiguration der Scheibenwischersysteme 1 nach Kundenwunsch ist mit dem erfindungsgemäßen Verfahren damit vorteilhaft unterstützt.

Die in den Patentansprüchen und der Beschreibung offenbarten Aspekte der Erfindung können sowohl einzeln als auch in jeder beliebigen Kombination für die Erfindung wesentlich sein.

## Patentansprüche

1. Verfahren zum Erkennen einer Notwendigkeit zum Durchführen eines Referenzwischvorgangs bei einem Scheibenwischersystem (1), wobei das Scheibenwischersystem (1) einen optischen Regensensor (2) umfasst und wobei in einem elektronischen Speicher (3) ein Arbeitspunkt des Regensensors (2) für eine im wesentlichen trockene Scheibe abgespeichert ist, umfassend die Schritte:
- Ermitteln eines aktuellen Arbeitspunktes des Regensensors;
- Vergleichen des aktuell ermittelten Arbeitspunktes mit dem abgespeicherten Arbeitspunkt;
**dadurch gekennzeichnet, dass**
- falls der Signalpegel des Regensensors für den aktuellen Arbeitspunkt und den abgespeicherten Arbeitspunkt im Wesentlichen identisch sind, wobei der Signalpegel einer in den Regensensor zurückgekoppelten Lichtmenge entspricht;
- ein Wischbefehl an das Scheibenwischersystem abgegeben wird, falls die den Arbeitspunkten zugeordneten Senderströme des Regensensors im Wesentlichen nicht mit den Arbeitspunkten zugeordneten Signalpegeln korrelieren.

2. Verfahren nach Anspruche 1, **dadurch gekennzeichnet, dass** eine Anpassung des abgespeicherten Arbeitspunktes an geänderte Betriebsbedingungen des Scheibenwischersystems durchgeführt wird.

3. Verfahren nach Anspruch 2, **dadurch gekennzeichnet, dass** eine Überwachung des abgespeicherten Arbeitspunktes nach jedem Referenzwischvorgang durchgeführt wird.

4. Verfahren nach Anspruch 3, **dadurch gekennzeichnet, dass** die Überwachung des abgespeicherten Arbeitspunkts im Betrieb des Regensensors permanent durchgeführt wird.

5. Verfahren nach einem der Ansprüche 2 oder 3, **dadurch gekennzeichnet, dass** mittels der Überwachung des Arbeitspunktes eine Änderung im Zustand der Scheibe und/oder eine Änderung im Zustand des Regensensors erkennbar ist.

6. Verfahren nach Anspruch 5, **dadurch gekennzeichnet, dass** im Falle, dass eine Änderung im Zustand der Scheibe und/oder im Zustand des Regensensors erkannt wurde, ein aktualisierter Arbeitspunkt im elektronischen Speicher abgespeichert wird.

7. Verfahren nach einem der Ansprüche 1 bis 6, **dadurch gekennzeichnet, dass** das Verfahren bei permanent aktiven Regensensoren verwendet wird.

8. Scheibenwischersystem (1) mit einem optischen Regensensor (2), wobei in einem elektronischen Speicher (3) ein Arbeitspunkt des Regensensors (2) für eine im wesentlichen trockene Scheibe abgespeichert ist, und **dadurch gekennzeichnet, dass** mit dem Scheibenwischersystem (1) ein Verfahren nach einem der Ansprüche 1 bis 7 durchführbar ist.

## Claims

1. Method for detecting a need to carry out a reference wiping operation in a windscreen wiper system (1), the windscreen wiper system (1) comprising an optical rain sensor (2), and an operating point of the rain sensor (2) for an essentially dry windscreen being stored in an electronic memory (3), said method comprising the steps of:
- determining a current operating point of the rain sensor;
- comparing the currently determined operating point with the stored operating point;
**characterized in that**
if the signal levels of the rain sensor for the current operating point and the stored operating point are essentially identical, the signal level corresponding to a quantity of light fed back into the rain sensor, there is no need for any action by the rain sensor;
- a wiping command is emitted to the windscreen wiper system if the transmitter currents of the rain sensor which are associated with the operating points essentially do not correlate with signal levels associated with the operating points.

2. Method according to Claim 1, **characterized in that** the stored operating point is adapted to changed operating conditions of the windscreen wiper system.

3. Method according to Claim 2, **characterized in that** the stored operating point is monitored after each reference wiping operation.

4. Method according to Claim 3, **characterized in that** the stored operating point is permanently monitored during operation of the rain sensor.

5. Method according to either of Claims 2 and 3, **characterized in that** a change in the state of the windscreen and/or a change in the state of the rain sensor can be detected by monitoring the operating point.

6. Method according to Claim 5, **characterized in that**, if a change in the state of the windscreen and/or in the state of the rain sensor has been detected, an updated operating point is stored in the electronic memory.

7. Method according to one of Claims 1 to 6, **characterized in that** the method is used in permanently active rain sensors.

8. Windscreen wiper system (1) having an optical rain sensor (2), an operating point of the rain sensor (2) for an essentially dry windscreen being stored in an electronic memory (3), **characterized in that** the windscreen wiper system (1) can be used to carry out a method according to one of Claims 1 to 7.

## Revendications

1. Procédé de détection de la nécessité d'exécuter une opération d'essuyage de référence des vitres dans un système (1) d'essuie-glace,
le système (1) d'essuie-glace comprenant un détecteur optique de pluie (2),
un point de travail du détecteur de pluie (2) correspondant à une vitre essentiellement sèche étant conservé dans une mémoire électronique (3),
le procédé comprenant les étapes qui consistent à :
- déterminer le point de travail effectif du détecteur de pluie,
- comparer le point de travail effectif déterminé au point de travail conservé en mémoire,
**caractérisé en ce que**
- au cas où le niveau du signal du détecteur de pluie est essentiellement identique pour le point de travail effectif et pour le point de travail conservé en mémoire, le niveau du signal correspondant à une quantité de lumière injectée dans le détecteur de pluie, il n'est pas nécessaire d'actionner le détecteur optique de pluie
- une commande d'essuyage des vitres est délivrée au système d'essuie-glace au cas où les courants d'émetteur du détecteur de pluie associés aux points de travail ne sont essentiellement pas corrélés aux niveaux des signaux associés aux points de travail.

2. Procédé selon la revendication 1, **caractérisé en ce qu'**une adaptation du point de travail conservé en mémoire à des conditions d'utilisation modifiées du système d'essuie-glace est exécutée.

3. Procédé selon la revendication 2, **caractérisé en ce qu'**une surveillance du point de travail conservé en mémoire est exécutée après chaque opération d'essuyage de vitre de référence.

4. Procédé selon la revendication 3, **caractérisé en ce que** la surveillance du point de travail conservé en mémoire est exécutée en permanence lorsque le détecteur de pluie est en fonctionnement.

5. Procédé selon l'une des revendications 2 ou 3, **caractérisé en ce qu'**une modification de l'état de la vitre et/ou une modification de l'état du détecteur de pluie peuvent être détectées au moyen de la surveillance du point de travail.

6. Procédé selon la revendication 5, **caractérisé en ce qu'**au cas où une modification de l'état de la vitre et/ou de l'état du détecteur de pluie a été détectée, un point de travail actualisé est placé dans la mémoire électronique.

7. Procédé selon l'une des revendications 1 à 6, **caractérisé en ce que** le procédé est utilisé avec des détecteurs de pluie actifs en permanence.

8. Système (1) d'essuie-glace doté d'un détecteur optique de pluie (2), un point de travail du détecteur de pluie correspondant à une vitre essentiellement sèche étant conservé dans une mémoire électronique (3), **caractérisé en ce que** le système (1) d'essuie-glace permet d'exécuter un procédé selon l'une des revendications 1 à 7.
